# EUROPEAN PATENT SPECIFICATION

(11) **EP 3 657 827 B1**
(45) Date of publication and mention of the grant of the patent: **23.11.2022**
(21) Application number: 18859075.6
(22) Date of filing: 18.09.2018
(51) Int. Cl.: H04L 12/14, H04M 15/00

(54) **BILLING METHOD AND DEVICE FOR MOBILE COMMUNICATION SYSTEM AND STORAGE MEDIUM**
ABRECHNUNGSVERFAHREN UND -VORRICHTUNG FÜR EIN MOBILES KOMMUNIKATIONSSYSTEM UND SPEICHERMEDIUM
PROCÉDÉ ET DISPOSITIF DE FACTURATION POUR SYSTÈME DE COMMUNICATION MOBILE ET SUPPORT DE STOCKAGE

(30) Priority: 22.09.2017 CN 201710865670
(43) Date of publication of application: 27.05.2020
(73) Proprietor: ZTE Corporation, Shenzhen, Guangdong 518057 (CN)
(72) Inventor: YANG, Minggui, Shenzhen Guangdong 518057 (CN); WANG, Yanjie, Shenzhen Guangdong 518057 (CN); DING, Jianpeng, Shenzhen Guangdong 518057 (CN)
(74) Representative: Novagraaf International SA
(86) International application number: PCT/CN2018/106328
(87) International publication number: WO 2019/057043

(56) References cited:
- WO-A1-2013/185530
- WO-A1-2014/000272
- WO-A1-2017/000242
- CN-A- 101 431 421
- CN-A- 102 695 155
- CN-A- 106 465 084
- "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.1.0, 25 January 2017 (2017-01-25), pages 1-65, XP051450184, [retrieved on 2017-01-25]
- "3rd Generation Partnership Project; Technical Specification Group Services and System Aspects; Telecommunication management; Charging management; Study on charging aspects of 5G system architecture Phase 1 (Release 15)", 3GPP STANDARD ; TECHNICAL REPORT ; 3GPP TR 32.899, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V0.2.0, 15 June 2017 (2017-06-15), pages 1-40, XP051298596, [retrieved on 2017-06-15]

## Description

### TECHNICAL FIELD

The present disclosure relates to the field of mobile communication, and in particular, to a charging method and device for a mobile communication system, and a storage medium.

### BACKGROUND

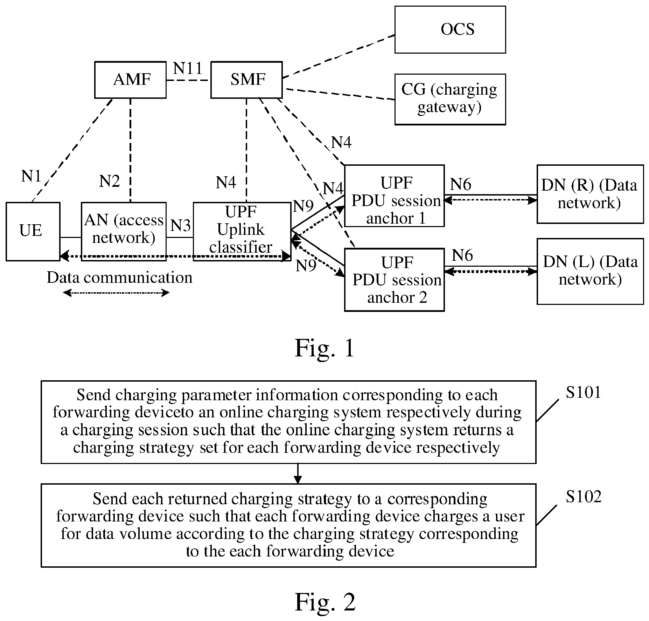

In the 5th generation mobile communication (5G) system, session management is implemented in a session management function (SMF) entity, and datagram forwarding is implemented in a user plane function (UPF) entity. As shown in Fig. 1, due to introduction of technologies such as an uplink classifier (ULCL), multi-homing, and a session and service continuity (SSC) mode in 5G, an SMF manages a plurality of UPFs simultaneously during a session. Consequently, an existing charging technology cannot meet a 5G charging requirement.

WO 2013/185530 A1 discloses a charge control method and apparatus, in order to solve technical problems in the standard framework cannot achieve more than a session within a single user long shared, to achieve multi-session within the user long efficient and accurate billing control.

WO 2017/000242 A1 or EP 3 301 957 A1 provide a charging method in order to mitigate a user account overdraft risk and improve user experience.

### SUMMARY

Embodiments of the present disclosure are intended to provide a charging method and device for a mobile communication system, and a storage medium, to implement at least charging for data volume of a plurality of transmission paths.

In order to solve the above technical problem, a charging method for a mobile communication system according to an embodiment of the present disclosure includes:
sending charging parameter information corresponding to each forwarding device to an online charging system respectively during a charging session such that the online charging system returns a charging strategy set for the each forwarding device respectively; and
sending each returned charging strategy to a corresponding forwarding device such that each forwarding device charges a user for data volume according to the corresponding charging strategy corresponding to the each forwarding device, wherein the forwarding device is a user function, UPF, device.

A session management function device according to an embodiment of the present disclosure includes a memory and a processor. The memory stores a charging computer program for a mobile communication system, and the processor executes the program to implement the steps of the method according to the embodiment of the present disclosure.

A computer readable storage medium according to an embodiment of the present disclosure stores a computer program. When the computer program is executed by a processor, the steps of the method according to the embodiment of the present disclosure are implemented.

In the embodiments of the present disclosure, the charging parameter information corresponding to each forwarding device is sent to the online charging system during a charging session such that the online charging system returns the charging strategy set for each forwarding device, and each returned charging strategy is sent to the corresponding forwarding device such that each forwarding device charges the user for the data volume according to the charging strategy corresponding to the each forwarding device. Therefore, in a multi-UPF scenario such as a ULCL, each forwarding device can independently use a quota allocated by the online charging system (OCS), and separate charging of a local traffic offload service is implemented without changing an interface between the session management function device and the OCS, so that an operator can independently calculate local offload volume. In addition, management of a plurality of data sessions and a single charging session is implemented, effectively reducing a number of authentication messages of the OCS.

### BRIEF DESCRIPTION OF THE DRAWINGS

Fig. 1 is a schematic diagram of a ULCL scenario;
Fig. 2 is a flowchart of a charging method for a mobile communication system according to an embodiment of the present disclosure;
Fig. 3 is a flowchart of charging processing in a ULCL scenario in which an anchor and a branch point are separated according to an embodiment of the present disclosure;
FIG. 4 is a flowchart of charging processing in a ULCL scenario in which an anchor and a branch point are combined according to an embodiment of the present disclosure;
Fig. 5 is a flowchart of charging processing of a single anchor SSC Mode 2 according to an embodiment of the present disclosure;
Fig. 6 is a flowchart of charging processing of a single anchor SSC Mode 3 according to an embodiment of the present disclosure; and
Fig. 7 is a schematic structural diagram of a session management function device according to an embodiment of the present disclosure.

### DETAILED DESCRIPTION

In order to solve the existing problem, embodiments of the present disclosure provide a charging method and device for a mobile communication system, and a storage medium. The following further describes this application in detail with reference to the accompanying drawings and embodiments. It should be understood that, the specific embodiments described herein are used only for explaining the present disclosure, and are not used for limiting the present disclosure.

In the subsequent description, prefixes such as "first" and "second" that are used to distinguish elements are only used for ease in description of the present invention, and the prefixes per se have no specific meaning.

### Embodiment one

As shown in Fig. 2, an embodiment of the present disclosure provides a charging method for a mobile communication system. The method includes the following steps.

In S101, charging parameter information corresponding to each forwarding device is sent to an online charging system respectively during a charging session such that the online charging system returns a charging strategy set for the each forwarding device respectively.

In S102, each returned charging strategy is sent to a corresponding forwarding device such that each forwarding device charges a user for data volume according to the charging strategy corresponding to the each forwarding device.

The method in this embodiment of the present disclosure applies to an SMF (device).

In this embodiment of the present disclosure, the charging parameter information corresponding to each forwarding device is sent to the online charging system during a charging session such that the online charging system returns the charging strategy set for the each forwarding device, and each returned charging strategy is sent to the corresponding forwarding device such that each forwarding device charges the user for the data volume according to the charging strategy corresponding to the each forwarding device. Therefore, in a multi-UPF scenario such as a ULCL, each forwarding device can independently use a quota allocated by the OCS, and separate charging of a local traffic offload service is implemented without changing an interface between the session management function device and the OCS, so that an operator can independently calculate local offload volume. In addition, management of a plurality of data sessions and a single charging session is implemented, effectively reducing a number of authentication messages of the OCS.

On the basis of the above embodiment, a variation of the above embodiment is further provided.

In an embodiment of the present disclosure, optionally, each forwarding device is configured to perform a data session with the user to forward the data flow of the user. Each forwarding device includes a first forwarding device and a second forwarding device. The charging parameter information includes charging identification information and service rate information.

The charging identification information includes a session identifier (SessionID) and a charging identifier (ChargingID). The service rate information includes a service identifier (SI) and a rating-group (RG).

The forwarding device is a UPF device.

In an embodiment of the present disclosure, optionally, sending charging parameter information corresponding to each forwarding device to an online charging system respectively during a charging session such that the online charging system returns a charging strategy set for each forwarding device respectively includes:
generating charging identification information for a data session of the first forwarding device, and sending the charging identification information and service rate information that corresponds to the first forwarding device to the online charging system, such that the online charging system returns a charging strategy set for the first forwarding device and creates a charging session; and
sending the charging identification information and service rate information that corresponds to the second forwarding device to the online charging system during the charging session, such that the online charging system returns a charging strategy set for the second forwarding device.

For example, during charging in the 5G ULCL scenario, after a 5G charging session is successfully created, when the SMF needs to trigger creation of a plurality of UPFs for offloading such that a user uses a traffic offload service, the following charging is performed.
1) The SMF uses a diameter session (which is a charging session and used for interaction with the OCS) created when the user goes online, to send a credit control update request to the OCS, the request carrying a same ChargingID existing when the user goes online. The credit control update request message carries a local offload traffic indication. After receiving the message, the OCS determines that the diameter session is a local traffic offload service, and then allocates a quota.
2) After receiving the quota, the SMF sends this part of the quota to a UPF for local offloading through a rule update message.

In this way, although datagram paths through different UPFs are different, an external OCS interface adopts a single session mode, that is, a same charging session is adopted after the local offloading and before the local offloading. The ChargingID remains unchanged and The SessionID is unique. Therefore, not only a problem that the OCS cannot distinguish between local offloading is solved, but also a quota allocation problem on the SMF is solved.

For another example, in an SSC mode scenario, regardless of SSC Mode 2 or Mode 3, the following charging is performed.
1) After the SMF receives protocol data unit (PDU) session deleting message, the SMF determines that SSC Mode 2 or Mode 3 session recreation needs to be performed. In this case, the SMF deletes the PDU session, but does not delete an OCS charging session corresponding to the PDU session.
2) After the SMF receives a PDU session (data session) recreation message, the SMF associates a recreated PDU session with the charging session corresponding to the original PDU session. The new PDU session is subsequently interacted with the OCS through the original charging session, so that the OCS interface remains unchanged during the PDU session recreation.
3) In a scenario such as that a user goes offline or triggers parameter update, the SMF sends a credit control release/update request to the OCS. Charging session key data such as a ChargingID, a SessionID, and other information carried in the credit control release/update request is consistent with that carried in a previous charging session, and therefore the OCS does not perceive recreation of the PDU session.

In an embodiment of the present disclosure, optionally, the data flow of the user includes local flow and non-local flow.

In an embodiment, before sending the charging identification information and service rate information that corresponds to the second forwarding device to the online charging system during the charging session, the method includes: creating a data call between the user and the second forwarding device, and forwarding the local flow via the second forwarding device by using an offloading technology.

In an embodiment, creating a data call between the user and the second forwarding device, and forwarding the local flow via the second forwarding device by using an offloading technology includes: creating a data call between the user and the second forwarding device; creating an uplink service classifier; and forwarding the local flow via the second forwarding device by using the uplink service classifier.

In an embodiment, sending the charging identification information and service rate information that corresponds to the second forwarding device to the online charging system during the charging session includes: sending a credit control update request to the online charging system in the charging session, the credit control update request carrying the charging identification information and the service rate information that corresponds to the second forwarding device.

The credit control update request further carries a local offload traffic indication.

The local offload traffic indication is added to a preset extension field in a multi-service credit control (MSCC) parameter of the credit control update request, such that the credit control update request further carries the local offload traffic indication.

For example, in order to facilitate the OCS to recognize a local traffic offload service to perform independent charging, in an embodiment of the present disclosure, the MSCC parameter is extended to add an optional filed (AVP) of [offload-traffic] to the parameter. [offload-traffic], [Service-Identifier] and [Rating-Group] together constitute a charging keyword (service rate information).

In a non-ULCL scenario, the OCS allocates a credit control quota based on an SI/RG. After triggering ULCL local offloading, a field [offload-traffic] is added to the credit control request reported by the SMF. The OCS allocates a credit control quota by using [offload-traffic] and SI/RG. Control of [offload-traffic] and control of the above SI/RG are performed independently .

In this embodiment, offload-traffic is defined as 1: a local traffic offload service; 0 or not carrying the AVP: common service. Certainly, in specific implementation, a name of the AVP may be changed or different values may be provided to the AVP to achieve a same effect. For example, a UPF address is added to distinguish between a local service and an offload service.

Based on the above improvements, in this embodiment of the present disclosure, local offloaded data flow (referred to as local flow for short) can be effectively recognized, so that different charging strategies may be applied to the recognized local offloaded data flow.

Even if all services using a same SI/RG fall on the first forwarding device (a UPF anchor 1 (Anchor1)) and the second forwarding device (a UPF anchor 2 (Anchor2)), the OCS can also effectively predict a user behavior in a same charging session. Therefore, the SMF may effectively allocate quotas allocated by the OCS, to different UPFs.

Descriptions are given below using examples.

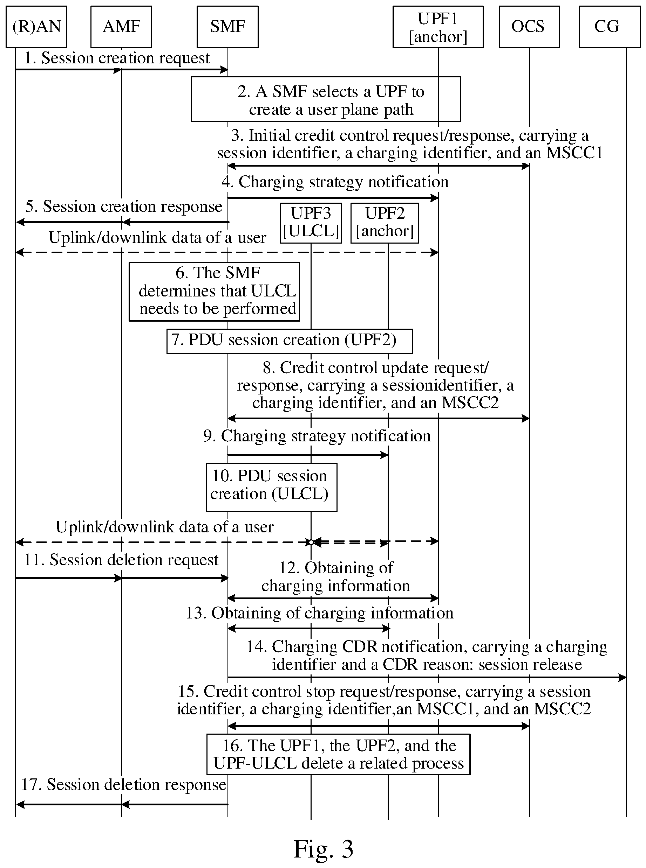

For example, as shown in FIG. 3, charging processing in which an anchor and a branch point are separated includes the following.
1) When a user uses a data service, a UE initiates a session creation request that arrives at the SMF through a radio access network (RAN) and an access and mobility management function (AMF). The SMF generates data such as a charging identifier (ChargingID) and a session identifier (SessionID), etc.
2) The SMF selects the UPF according to a processing rule of the SMF and creates a user plane path for the user.
3) The SMF sends an initial credit control request message to the OCS. The message carries data such as a ChargingID, a SessionID, and a service MSCC used by the user. The MSCC1 carries an SI of a service and a corresponding rating-group (RG). The OCS grants, when receiving the request, a credit to the user according to user information (such as charging identification information) and the SI/RG, and sends a response message of the initial credit control request to the SMF. The response message carries information, such as a quota, of the user, etc.
4) After receiving the response of the initial credit control request from the OCS, the SMF notifies the UPF1 (the first forwarding device and the anchor) of a charging strategy, and the UPF performs charging according to the charging strategies.
5) The SMF sends a session creation response to AMF-RAN-UE. So far, the charging session creation is completed.
   A user datagram (data flow) is forwarded via RAN-UPF1.
6) Due to a change in a service used by the user, the SMF determines that a ULCL process needs to be performed to offload local traffic.
7) Under control of the SMF, another anchor UPF2 (also referred to as a branch point) is created to connect to a local server, etc.
8) After a traffic offload service arrives, the SMF sends a credit control update request by using the same SessionID and ChargingID, but carrying a new MSCC (recorded as MSCC2). In addition to the SI/RG same as MSCC1, MSCC2 further carries an offload-traffic AVP of 1, indicating that a quota applied for in the current CCR is a quota for local traffic offload service. After receiving the request, the OCS redistributes the quota for the SI/RG according to the offload-traffic AVP, which is completely independent of the MSCC1. The OCS sends a response of the initial credit control request to the SMF after processing.
9) The SMF notifies the UPF2 of a new charging strategy, and the UPF2 performs calculation using the new charging strategy.
10) An uplink service classifier UPF3 (ULCL) is created under control of the SMF. In this case, if a local offloaded service (that is, local data flow) is accessed by uplink and downlink data of the user, a user plane path is forwarded via RAN←→UPF3←→UPF2. During accessing of other common services (that is, non-local data flow), the user plane path is forwarded via RAN←→UPF3←→UPF1, so that ULCL switching is completed.
11) The UE initiates a session deletion request, and the request arrives at the SMF via RAN-AMF (an update process is similar to a deletion process and is therefore omitted).
12) The SMF obtains user plane-related charging information from the UPF1 (processes in which the SMF obtains the charging information from the UPF1 and the UPF2 are parallel, and for convenience of illustration of the specification, figures are shown in a serial manner).
13) The SMF obtains the user plane-related charging information from the UPF2.
14) The SMF generates an offline charging call data record SMF CDR (CDR is a detailed call record) based on the information collected in the above steps and sends the offline charging CDR to a charging gateway (CG). In the charging CDR, normal flow of an SI/RG and local offload traffic of the service are independently counted. The charging CDR carries a charging identifier, and a reason for the CDR is session release.
15) The SMF sends a credit control stop request message to the OCS. In addition to the key parameters of the SessionID and the ChargingID, two MSCCs( MSCC1 and MSCC2 respectively) are carried. The MSCC1 carries usage information via RAN←→UPF3←→ UPF1, and the MSCC2 carries usage information via RAN←→UPF3←→UPF2 and carries an offload-traffic AVP for stopping the session with the OCS. After receiving the control stop request message, the OCS performs independent deduction on the MSCC1 and the MSCC2 according to operational needs.
16) The SMF instructs the UPF1, the UPF2, and the UPF3 to delete session-related processes.
17) The SMF sends a session deletion response to the AMF-RAN-UE, and the process ends.

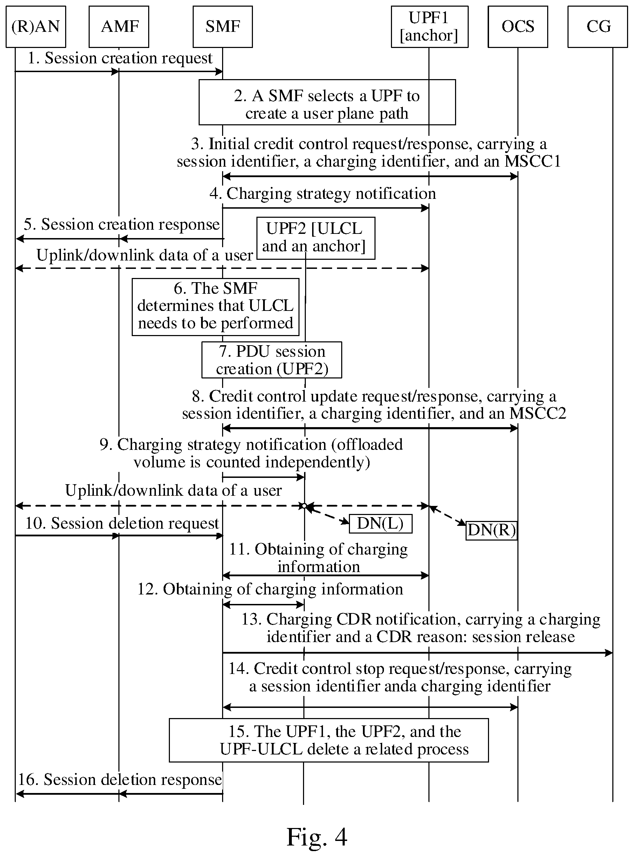

For another example, as shown in FIG. 4, charging processing in which an anchor and a branch point are combined includes the following.
1) When a user uses a data service, a UE initiates a session creation request that arrives at the SMF via RAN-AMF. The SMF generates data such as a ChargingID and a SessionID, etc.
2) The SMF selects the UPF according to a processing rule of the SMF and creates a user plane path for the user.
3) The SMF sends an initial credit control request message to the OCS. The message carries data such as a ChargingID, a SessionID, and a service MSCC1 used by the user. The MSCC1 carries an SI of a service and a corresponding rating-group (RG). The OCS grants, when receiving the request, a credit to the user according to user information and the SI/RG, and sends a response message of the initial credit control request to the SMF. The response message carries information, such as a quota, of the user, etc.
4) After receiving the response of the initial credit control request from the OCS, the SMF notifies the UPF of a charging strategy, and the UPF performs charging according to the charging strategies.
5) The SMF sends a session creation response to AMF-RAN-UE. So far, the session creation is completed.
   A user datagram is forwarded via RAN-UPF1.
6) Due to a change in a service used by the user, the SMF determines that a ULCL process needs to be performed to offload local traffic.
7) Under control of the SMF, another anchor UPF2 is created to connect to a local server, etc.
8) After a traffic offload service arrives, the SMF sends a credit control update request by using the same SessionID and ChargingID, but carrying a new MSCC (recorded as MSCC2). In addition to the SI/RG same as MSCC1, MSCC2 further carries an offload-traffic AVP of 1, indicating that a quota applied for in the current CCR is a quota for local offloaded service. After receiving the request, the OCS redistributes the quota for the SI/RG according to the offload-traffic AVP, which is completely independent of the MSCC1. The OCS sends a response of the initial credit control request to the SMF after processing.
9) Since the UPF2 also serves as an anchor and a classifier ULCL, the SMF delivers charging strategy information to the UPF2. The charging strategy information carries information such as a classification rule, etc. In response to the quota of the MSCC2 allocated by the OCS in the above steps, the SMF notifies UPF2 that this part of the quota is counted with respect to offload traffic as the anchor and traffic offloaded to the UPF1 is not counted to this part of the quota.
   In this case, if a local offloaded service is accessed by uplink and downlink data of the user, a user plane path is forwarded via RAN←→UPF2 to access a local DN(L). During accessing of other common services, the user plane path is forwarded via RAN←→UPF2 ←→UPF1 to access a DN(R), so that ULCL switching is completed.
10) The UE initiates a session deletion request, and the request arrives at the SMF via RAN-AMF.
11) The SMF obtains user plane-related charging information from the UPF1 (processes in which the SMF obtains the charging information from the UPF1 and the UPF2 are parallel, and for convenience of illustration of the present disclosure, figures are drawn in a serial manner).
12) The SMF obtains user plane-related charging information from the UPF2. In this case, only local offload traffic information is obtained.
13) The SMF generates an offline charging CDR SMF CDR based on the information collected in the above steps and sends the offline charging CDR to a charging gateway (CG). In the charging CDR, normal flow of an SI/RG and local offload traffic of the service are independently counted. The charging CDR carries a charging identifier, and a reason for the CDR is session release.
14) The SMF sends a credit control stop request message to the OCS. In addition to the key parameters the SessionID and the ChargingID, two MSCCs( MSCC1 and MSCC2 respectively) are carried. The MSCC1 carries usage information via RAN←→UPF1←→ DN(R) and usage information via RAN←→UPF2←→UPF1←→DN(R) counted on the UPF1, and the MSCC2 carries usage information via RAN←→UPF2←→DN(L) counted on the UPF2, and carries an offload-traffic AVP for stopping the session with the OCS. After receiving the control stop request message, the OCS performs independent deduction on the MSCC1 and the MSCC2 according to operational needs.
15) The SMF instructs the UPF1 and the UPF2 to delete session-related processes.
16) The SMF sends a session deletion response to the AMF-RAN-UE, and the process ends.

In an embodiment of the present disclosure, optionally, before sending the charging identification information and service rate information that corresponds to the second forwarding device to the online charging system during the charging session, the method includes: switching the data flow of the user from the first forwarding device to the second forwarding device in a session and service continuity mode.

In an embodiment, switching the data flow of the user from the first forwarding device to the second forwarding device in a session and service continuity mode includes: deleting a data call between the user and the first forwarding device; and creating a data call between the user and the second forwarding device in the session and service continuity mode.

After creating a data call between the user and the second forwarding device in the session and service continuity mode, the method includes: associating the data call between the user and the second forwarding device with the charging session.

In an embodiment of the present disclosure, optionally, charging identification information includes a session identifier and a charging identifier. The service rate information includes a service identifier and a rating-group.

Generating charging identification information for a data session of the first forwarding device, and sending the charging identification information and service rate information that corresponds to the first forwarding device to the online charging system includes: generating a session identifier and a charging identifier according to a charging session creation request of the user; creating the data session with the first forwarding device; and sending an initial credit control request to the online charging system, the initial credit control request carrying the session identifier, the charging identifier, and a service identifier and a rating-group corresponding to the first forwarding device.

In an embodiment of the present disclosure, optionally, the method further includes: obtaining, using the charging identification information, charging information obtained by each forwarding device when performing charging during deletion of the charging session.

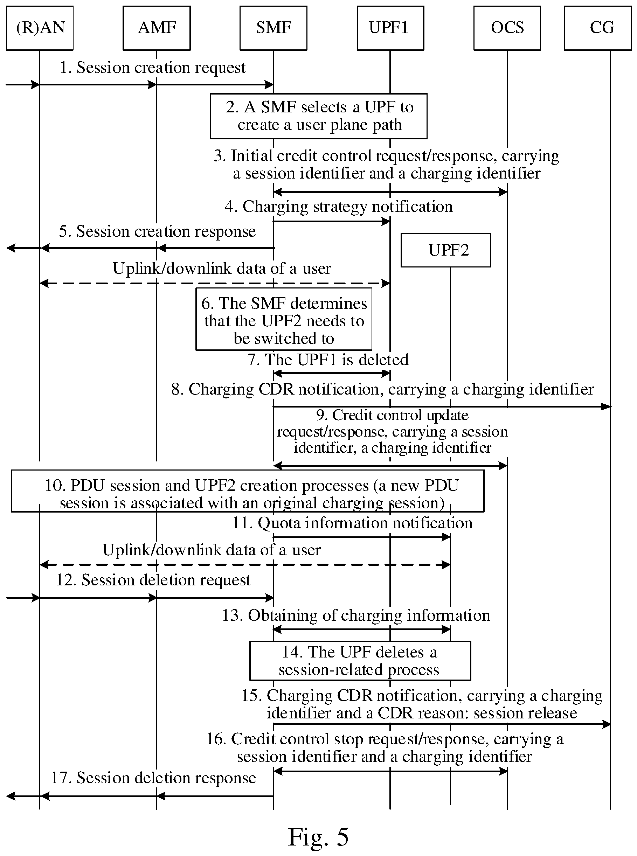

For example, as shown in FIG. 5, charging processing of a single anchor SSC Mode 2 includes the following.
1) When a user uses a data service, a UE initiates a session creation request that arrives at the SMF via RAN-AMF. The SMF generates data such as a ChargingID and a SessionID, etc.
2) The SMF selects the UPF according to a processing rule of the SMF and creates a user plane path for the user.
3) The SMF sends an initial credit control request message to the OCS. The message carries data such as a ChargingID, a SessionID, and a service MSCC1 used by the user. The MSCC1 carries an SI of a service and a corresponding rating-group (RG). The OCS grants, when receiving the request, a credit to the user according to user information and the SI/RG, and sends a response message of the initial credit control request to the SMF. The response message carries information, such as a quota, of the user, etc.
4) After receiving the response of the initial credit control request from the OCS, the SMF notifies the UPF1 of a charging strategy, and the UPF1 performs charging according to the charging strategies.
5) The SMF sends a session creation response to AMF-RAN-UE. So far, the session creation is completed.
   A user datagram is forwarded via RAN-UPF1.
6) The user plane path needs to be switched due to a change of the user's position, etc. The SMF determines that a user plane session needs to be switched from the UPF1 (the first forwarding device) to the UPF2 (second forwarding device) in the SSC Mode 2.
7) The SMF obtains charging information such as volume, a time, and an event, etc. on the UPF1, and deletes a UPF1 session.
8) The SMF generates a CDR based on the information collected in the above steps and sends the CDR to the charging gateway (CG). The CDR carries information such as address information of the UPF1, a ChargingID, and a reason for closing of the CDR being UPF release.
9) The SMF sends a credit control update request to indicate that a charging condition is changed. The OCS sends a credit control update request response to the SMF after receiving a processing request. The response carries new quota information.
10) The SMF creates a PDU session 2 with the UPF2. In this case, a new PDU session needs to be associated with an original PDU session, and key data such as a ChargingID, a SessionID of a session charging, and other information are obtained for charging using a same charging session.
11) The SMF sends the quota information in 9) to the new UPF2, and the UPF2 uses the charging strategy for counting.
   In this case, the uplink and downlink data of the user are forwarded via the UPF2.
12) The UE initiates a session deletion request, and the request arrives at the SMF via RAN-AMF.
13) The SMF obtains the user plane-related charging information from the UPF2.
14) The SMF instructs the UPF to delete session-related processes.
15) The SMF generates a CDR based on the information collected in the above steps and sends the CDR to the charging gateway (CG). The CDR carries information such as address information of the UPF2, a closed CDR, and a reason for closing being UPF release.
16) The SMF sends, to the OCS, a credit control stop request message carrying related charging information. The message carries parameters such as a SessionID, a ChargingID, address information of the UPF2, etc. for stopping the session with the OCS. The SessionID and the ChargingID carried in the message are the same as the SessionID and the ChargingID in step 3.
17) The SMF sends a session deletion response to the AMF-RAN-UE, and the process ends.

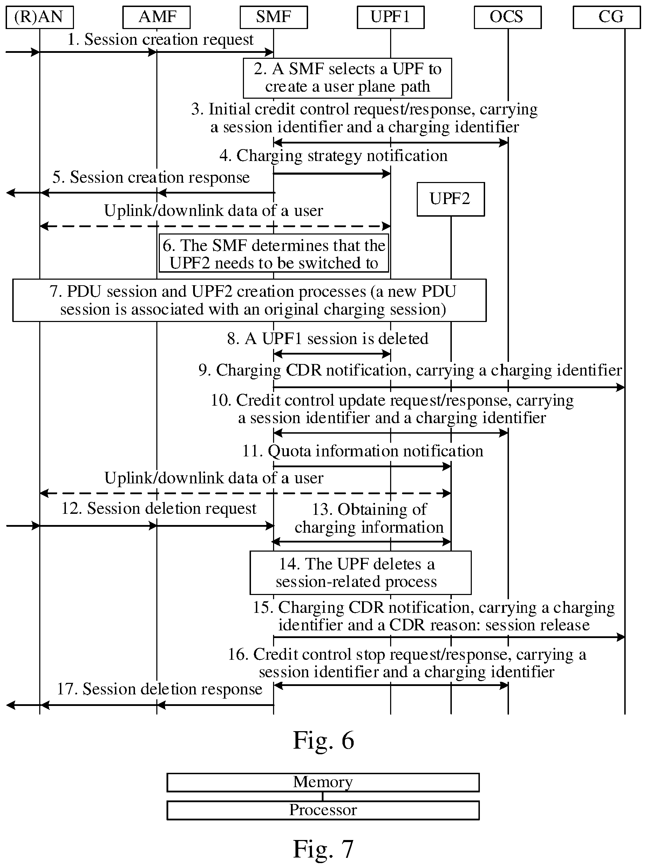

For example, as shown in FIG. 6, charging processing of a single anchor SSC Mode 3 includes the following.
1) When a user uses a data service, a UE initiates a session creation request that arrives at the SMF via RAN-AMF. The SMF generates data such as a ChargingID and a SessionID, etc.
2) The SMF selects the UPF according to a processing rule of the SMF and creates a user plane path for the user.
3) The SMF sends an initial credit control request message to the OCS. The message carries data such as a ChargingID, a SessionID, and a service MSCC used by the user. The MSCC1 carries an SI of a service and a corresponding rating-group (RG). The OCS grants, when receiving the request, a credit to the user according to user information and the SI/RG, and sends a response message of the initial credit control request to the SMF. The response message carries information, such as a quota, of the user etc.
4) After receiving the response of the initial credit control request from the OCS, the SMF notifies the UPF of a charging strategy, and the UPF performs charging according to the charging strategies.
5) The SMF sends a session creation response to AMF-RAN-UE. So far, the session creation is completed.
   A user datagram is forwarded via RAN-UPF1.
6) The user plane path needs to be switched due to a change of the user's position, etc. The SMF determines that a user plane session needs to be switched from the UPF1 to the UPF2 in the SSC Mode 3.
7) The SMF creates a PDU session 2 with the UPF2. In this case, a new PDU session needs to be associated with an original PDU session, and key data such as a ChargingID, a SessionID of a session charging, and other information are obtained for charging using a same charging session.
8) The SMF obtains charging information such as volume, a time, and an event, etc. on the UPF1, and deletes a UPF1 session.
9) The SMF generates a CDR based on the information collected in the above steps and sends the CDR to the charging gateway (CG). The CDR carries information such as address information of the UPF1, a ChargingID, and a reason for close of the CDRbeing UPF release.
10) The SMF sends a credit control update request to indicate that a charging condition is changed. The OCS sends a credit control update request response to the SMF after receiving a processing request. The response carries new quota information.
11) The SMF sends the quota information in 10) to the new UPF2, and the UPF2 uses the charging strategy for counting.
   In this case, the uplink and downlink data of the user are forwarded via the UPF2.
12) The UE initiates a session deletion request, and the request arrives at the SMF via RAN-AMF.
13) The SMF obtains the user plane-related charging information from the UPF2.
14) The SMF instructs the UPF to delete session-related processes.
15) The SMF generates a CDR based on the information collected in the above steps and sends the CDR to the charging gateway (CG). The CDR carries information such as address information of the UPF2, a closed CDR, and a reason for closing being UPF release.
16) The SMF sends, to the OCS, a credit control stop request message carrying related charging information. The message carries parameters such as a SessionID, a ChargingID, address information of the UPF2, etc. for stopping the session with the OCS. The SessionID and the ChargingID carried in the message are the same as the SessionID and the ChargingID in step 3.
17) SMF sends a session deletion response to the AMF-RAN-UE, and the process ends.

### Embodiment two

As shown in Fig. 7, an embodiment of the present disclosure provides a session management function device. The session management function device includes a memory and a processor. The memory stores a charging computer program for a mobile communication system, and the processor executes the program to implement the steps of the method according to any of Embodiment one.

In this embodiment of the present disclosure, charging parameter information corresponding to each forwarding device is sent to an online charging system during a charging session such that the online charging system returns a charging strategy set for each forwarding device, and each returned charging strategy is sent to the corresponding forwarding device such that each forwarding device charges the user for the data volume according to the charging strategy corresponding to the each forwarding device. Therefore, in a multi-UPF scenario such as a ULCL, each forwarding device can independently use a quota allocated by the OCS, and separate charging of a local traffic offload service is implemented without changing an interface between the session management function device and the OCS, so that an operator can independently calculate local offload traffic. In addition, management of a plurality of data sessions and a single charging session is implemented, effectively reducing a number of authentication messages of the OCS.

In particular, the processor in this embodiment of the present disclosure executes the program to implement the following steps: sending charging parameter information corresponding to each forwarding device to an online charging system respectively during a charging session such that the online charging system returns a charging strategy set for each forwarding device respectively; and sending each returned charging strategy to a corresponding forwarding device such that each forwarding device charges a user for data volume according to the charging strategy corresponding to the each forwarding device.

In an embodiment of the present disclosure, optionally, each forwarding device is configured to perform a data session with the user to forward the data flow of the user. Each forwarding device includes a first forwarding device and a second forwarding device. The charging parameter information includes charging identification information and service rate information.

In an embodiment of the present disclosure, optionally, the processor executes the program to implement the following steps: generating charging identification information for a data session of the first forwarding device, and sending the charging identification information and service rate information that corresponds to the first forwarding device to the online charging system, such that the online charging system returns a charging strategy set for the first forwarding device and creates a charging session; and sending the charging identification information and service rate information that corresponds to the second forwarding device to the online charging system during the charging session, such that the online charging system returns a charging strategy set for the second forwarding device.

In an embodiment, the data flow of the user includes local flow and non-local flow.

The processor executes the program to implement the following steps: before sending the charging identification information and service rate information that corresponds to the second forwarding device to the online charging system during the charging session, creating a data call between the user and the second forwarding device, and forwarding the local flow via the second forwarding device by using an offloading technology.

In an embodiment, the processor executes the program to implement the following steps: creating a data call between the user and the second forwarding device; creating an uplink service classifier; and forwarding the local flow via the second forwarding device by using the uplink service classifier.

In an embodiment, the processor executes the program to implement the following step: sending a credit control update request to the online charging system during the charging session, the credit control update request carrying the charging identification information and the service rate information that corresponds to the second forwarding device.

In an embodiment, the credit control update request further carries a local offload traffic indication.

In an embodiment, the local offload traffic indication is added to a preset extension field in an MSCC parameter of the credit control update request, such that the credit control update request further carries the local offload traffic indication.

In an embodiment of the present disclosure, optionally, the processor executes the program to implement the following step: switching the data flow of the user from the first forwarding device to the second forwarding device in a session and service continuity mode.

In an embodiment of the present disclosure, optionally, the processor executes the program to implement the following steps: deleting a data call between the user and the first forwarding device; and creating a data call between the user and the second forwarding device in the session and service continuity mode.

In an embodiment, the processor executes the program to implement the following step: after creating a data call between the user and the second forwarding device in the session and service continuity mode, associating the data call between the user and the second forwarding device with the charging session.

In an embodiment of the present disclosure, optionally, the charging identification information includes a session identifier and a charging identifier. The service rate information includes a service identifier and a rating-group.

The processor executes the program to implement the following steps: generating a session identifier and a charging identifier according to a charging session creation request of the user; creating the data session with the first forwarding device; and sending an initial credit control request to the online charging system, the initial credit control request carrying the session identifier, the charging identifier, and a service identifier and a rating-group corresponding to the first forwarding device.

In an embodiment of the present disclosure, optionally, the processor executes the program to implement the following step: obtaining, using the charging identification information, charging information obtained by each forwarding device when performing charging during deletion of the charging session.

In an embodiment of the present disclosure, the forwarding device is a UPF device.

For specific implementation of this embodiment of the present disclosure, refer to Embodiment one, and this embodiment has the technical effects of Embodiment one.

### Embodiment three

An embodiment of the present disclosure provides a computer-readable storage medium. The storage medium stores a charging computer program for a mobile communication system .When the program is executed by at least one processor, the steps of the method according to any of Embodiment one are implemented.

The computer-readable storage medium in this embodiment of the present disclosure may be a RAM memory, a flash memory, a ROM memory, an EPROM memory, an EEPROM memory, a register, a hard disk, a mobile hard disk, a CD-ROM, or a storage medium of any other form known in the art. A storage medium may be connected to the processor, so that the processor can read information from the storage medium and write information to the storage medium. Alternatively, the storage medium may be an integral part of the processor. The processor and the storage medium may be located in an application specific integrated circuit.

For specific implementation of this embodiment of the present disclosure, refer to Embodiment one and Embodiment two, and this embodiment has the corresponding technical effects.

In the foregoing specific implementations, the objective, technical solutions, and benefits of the present invention are further described in detail. It should be understood that the foregoing descriptions are merely specific implementations of the present invention, but are not intended to limit the protection scope of the present invention. Any modification, equivalent replacement, or improvement made without departing from the scope of the present invention as defined in the appended claims should fall within the protection scope of the present invention.

## Claims

1. A charging method of a session management function, SMF, device, for a mobile communication system, comprising:
sending (S101) charging parameter information corresponding to each forwarding device to an online charging system respectively during a charging session such that the online charging system returns a charging strategy set for each forwarding device respectively; and
sending (S102) each returned charging strategy to a corresponding forwarding device such that each forwarding device charges a user for data volume according to the corresponding charging strategy;
wherein the forwarding device is a user plane function, UPF device.

2. The method according to claim 1, wherein each forwarding device is configured to perform a data session with the user to forward data flow of the user; each forwarding device comprises a first forwarding device and a second forwarding device; and the charging parameter information comprises charging identification information and service rate information.

3. The method according to claim 2, wherein sending the charging parameter information corresponding to each forwarding device to the online charging system respectively during the charging session such that the online charging system returns a charging strategy set for each forwarding device respectively comprises:
generating the charging identification information for the data session with the first forwarding device, and sending the charging identification information and the service rate information that corresponds to the first forwarding device to the online charging system, such that the online charging system returns a charging strategy set for the first forwarding device and creates the charging session; and
sending the charging identification information and service rate information that corresponds to the second forwarding device to the online charging system during the charging session, such that the online charging system returns a charging strategy set for the second forwarding device.

4. The method according to claim 3, wherein the data flow of the user comprises local flow and non-local flow; and
before sending the charging identification information and service rate information that corresponds to the second forwarding device to the online charging system during the charging session, the method comprises:
creating a data call between the user and the second forwarding device, and forwarding the local flow via the second forwarding device by using an offloading technology.

5. The method according to claim 4, wherein creating the data call between the user and the second forwarding device, and forwarding the local flow via the second forwarding device by using an offloading technology comprises:
creating the data call between the user and the second forwarding device;
creating an uplink service classifier; and
forwarding the local flow via the second forwarding device by using the uplink service classifier.

6. The method according to claim 4, wherein sending the charging identification information and service rate information that corresponds to the second forwarding device to the online charging system during the charging session comprises:
sending a credit control update request to the online charging system during the charging session, the credit control update request carrying the charging identification information and the service rate information that corresponds to the second forwarding device.

7. The method according to claim 6, wherein the credit control update request further carries a local offload traffic indication.

8. The method according to claim 7, wherein the local offload traffic indication is added to a preset extension field in a multi-service credit control MSCC parameter of the credit control update request, such that the credit control update request further carries the local offload traffic indication.

9. The method according to claim 3, wherein before sending the charging identification information and service rate information that corresponds to the second forwarding device to the online charging system during the charging session, the method further comprises:
switching the data flow of the user from the first forwarding device to the second forwarding device in a session and service continuity mode.

10. The method according to claim 9, wherein switching the data flow of the user from the first forwarding device to the second forwarding device in the session and service continuity mode comprises:
deleting a data call between the user and the first forwarding device; and
creating a data call between the user and the second forwarding device in the session and service continuity mode.

11. The method according to claim 10, wherein creating the data call between the user and the second forwarding device in the session and service continuity mode comprises:
associating the data call between the user and the second forwarding device with the charging session.

12. The method according to any of claims 3 to 11, wherein the charging identification information comprises a session identifier and a charging identifier; the service rate information comprises a service identifier and a rating-group; and
generating the charging identification information for the data session with the first forwarding device, and sending the charging identification information and the service rate information that corresponds to the first forwarding device to the online charging system comprises:
generating the session identifier and the charging identifier according to a charging session creation request of the user;
creating the data session with the first forwarding device; and
sending an initial credit control request to the online charging system, the initial credit control request carrying the session identifier, the charging identifier, and the service identifier and the rating-group that correspond to the first forwarding device.

13. The method according to any of claims 2 to 12, further comprising:
obtaining, by using the charging identification information, charging information obtained by the each forwarding device performing charging, during deletion of the charging session.

14. A session management function device, comprising a memory and a processor, wherein the memory stores a charging computer program for a mobile communication system, and the processor executes the program to implement the steps of the method according to any of claims 1 to 13.

15. A computer readable storage medium storing a computer program, wherein when the computer program is executed by a processor, the steps of the method according to any of claims 1 to 13 are implemented.

## Patentansprüche

1. Abrechnungsverfahren einer Sitzungsverwaltungsfunktions(SMF)-Vorrichtung für ein mobiles Kommunikationssystem, das Folgendes umfasst:
jeweiliges Senden (S101) von Abrechnungsparameterinformationen, die jeder Weiterleitungsvorrichtung entsprechen, während einer Abrechnungssitzung an ein Onlineabrechnungssystem, derart, dass das Onlineabrechnungssystem für jede Weiterleitungsvorrichtung jeweils einen Abrechnungsstrategiesatz zurückgibt; und
Senden (S102) jeder zurückgegebenen Abrechnungsstrategie an eine entsprechende Weiterleitungsvorrichtung, derart, dass jede Weiterleitungsvorrichtung einem Benutzer gemäß der entsprechenden Abrechnungsstrategie ein Datenvolumen in Rechnung stellt;
wobei die Weiterleitungsvorrichtung eine Benutzerebenenfunktions(UPF)-Vorrichtung ist.

2. Verfahren nach Anspruch 1, wobei jede Weiterleitungsvorrichtung dazu ausgelegt ist, eine Datensitzung mit dem Benutzer durchzuführen, um einen Datenfluss des Benutzers weiterzuleiten; jede Weiterleitungsvorrichtung eine erste Weiterleitungsvorrichtung und eine zweite Weiterleitungsvorrichtung umfasst und die Abrechnungsparameterinformationen Abrechnungsidentifikationsinformationen und Dienstrateninformationen umfassen.

3. Verfahren nach Anspruch 2, wobei das jeweilige Senden von Abrechnungsparameterinformationen, die jeder Weiterleitungsvorrichtung entsprechen, während der Abrechnungssitzung an das Onlineabrechnungssystem, derart, dass das Onlineabrechnungssystem für jede Weiterleitungsvorrichtung jeweils einen Abrechnungsstrategiesatz zurückgibt, Folgendes umfasst:
Erzeugen der Abrechnungsidentifikationsinformationen für die Datensitzung mit der ersten Weiterleitungsvorrichtung und Senden der Abrechnungsidentifikationsinformationen und der Dienstrateninformationen, die der ersten Weiterleitungsvorrichtung entsprechen, an das Onlineabrechnungssystem, derart, dass das Onlineabrechnungssystem einen Abrechnungsstrategiesatz für die erste Weiterleitungsvorrichtung zurückgibt und die Abrechnungssitzung erstellt; und
Senden der Abrechnungsidentifikationsinformationen und der Dienstrateninformationen, die der zweiten Weiterleitungsvorrichtung entsprechen, während der Abrechnungssitzung an das Onlineabrechnungssystem, derart, dass das Onlineabrechnungssystem einen Abrechnungsstrategiesatz für die zweite Weiterleitungsvorrichtung zurückgibt.

4. Verfahren nach Anspruch 3, wobei der Datenfluss des Benutzers einen lokalen Fluss und einen nicht lokalen Fluss umfasst; und
vor dem Senden der Abrechnungsidentifikationsinformationen und der Dienstrateninformationen, die der zweiten Weiterleitungsvorrichtung entsprechen, während der Abrechnungssitzung an das Onlineabrechnungssystem umfasst das Verfahren Folgendes:
Erstellen eines Datenanrufs zwischen dem Benutzer und der zweiten Weiterleitungsvorrichtung und Weiterleiten des lokalen Flusses via die zweite Weiterleitungsvorrichtung unter Verwendung einer Auslagerungstechnologie.

5. Verfahren nach Anspruch 4, wobei das Erstellen des Datenanrufs zwischen dem Benutzer und der zweiten Weiterleitungsvorrichtung und das Weiterleiten des lokalen Flusses via die zweite Weiterleitungsvorrichtung unter Verwendung einer Auslagerungstechnologie Folgendes umfasst:
Erstellen des Datenanrufs zwischen dem Benutzer und der zweiten Weiterleitungsvorrichtung;
Erstellen eines Uplinkdienstklassifizierers; und
Weiterleiten des lokalen Flusses via die zweite Weiterleitungsvorrichtung unter Verwendung des Uplinkdienstklassifizierers.

6. Verfahren nach Anspruch 4, wobei das Senden der Abrechnungsidentifikationsinformationen und der Dienstrateninformationen, die der zweiten Weiterleitungsvorrichtung entsprechen, während der Abrechnungssitzung an das Onlineabrechnungssystem Folgendes umfasst:
Senden einer Guthabensteuerungsaktualisierungsanforderung während der Abrechnungssitzung an das Onlineabrechnungssystem, wobei die Guthabensteuerungsaktualisierungsanforderung die Abrechnungsidentifikationsinformationen und die Dienstrateninformationen beinhaltet, die der zweiten Weiterleitungsvorrichtung entsprechen.

7. Verfahren nach Anspruch 6, wobei die Guthabensteuerungsaktualisierungsanforderung ferner eine lokale Auslagerungsverkehrsanzeige beinhaltet.

8. Verfahren nach Anspruch 7, wobei die lokale Auslagerungsverkehrsanzeige zu einem voreingestellten Erweiterungsfeld in einem Mehrfachdienstguthabensteuer(MSCC)-Parameter der Guthabensteuerungsaktualisierungsanforderung hinzugefügt wird, derart, dass die Guthabensteuerungsaktualisierungsanforderung ferner die lokale Auslagerungsverkehrsanzeige beinhaltet.

9. Verfahren nach Anspruch 3, wobei das Verfahren vor dem Senden der Abrechnungsidentifikationsinformationen und der Dienstrateninformationen, die der zweiten Weiterleitungsvorrichtung entsprechen, während der Abrechnungssitzung an das Onlineabrechnungssystem ferner Folgendes umfasst:
Umschalten des Datenflusses des Benutzers in einem Sitzungs- und Dienstfortführungsmodus von der ersten Weiterleitungsvorrichtung zur zweiten Weiterleitungsvorrichtung.

10. Verfahren nach Anspruch 9, wobei das Umschalten des Datenflusses des Benutzers im Sitzungs- und Dienstfortführungsmodus von der ersten Weiterleitungsvorrichtung zur zweiten Weiterleitungsvorrichtung Folgendes umfasst:
Löschen eines Datenanrufs zwischen dem Benutzer und der ersten Weiterleitungsvorrichtung; und
Erstellen eines Datenanrufs zwischen dem Benutzer und der zweiten Weiterleitungsvorrichtung im Sitzungs- und Dienstfortführungsmodus.

11. Verfahren nach Anspruch 10, wobei das Erstellen des Datenanrufs zwischen dem Benutzer und der zweiten Weiterleitungsvorrichtung im Sitzungs- und Dienstfortführungsmodus Folgendes umfasst:
Verknüpfen des Datenanrufs zwischen dem Benutzer und der zweiten Weiterleitungsvorrichtung mit der Abrechnungssitzung.

12. Verfahren nach einem der Ansprüche 3 bis 11, wobei die Abrechnungsidentifikationsinformationen eine Sitzungskennung und eine Abrechnungskennung umfassen, die Dienstrateninformationen eine Dienstkennung und eine Einstufungsgruppe umfassen; und
das Erzeugen der Abrechnungsidentifikationsinformationen für die Datensitzung mit der ersten Weiterleitungsvorrichtung und das Senden der Abrechnungsidentifikationsinformationen und der Dienstrateninformationen, die der ersten Weiterleitungsvorrichtung entsprechen, an das Onlineabrechnungssystem umfassen Folgendes:
Erzeugen der Sitzungskennung und der Abrechnungskennung gemäß einer Abrechnungssitzungserstellungsanforderung des Benutzers;
Erstellen der Datensitzung mit der ersten Weiterleitungsvorrichtung; und
Senden einer anfänglichen Guthabensteueranforderung an das Onlineabrechnungssystem, wobei die anfängliche Guthabensteueranforderung die Sitzungskennung, die Abrechnungskennung und die Dienstkennung sowie die Einstufungsgruppe, die der ersten Weiterleitungsvorrichtung entsprechen, beinhaltet.

13. Verfahren nach einem der Ansprüche 2 bis 12, das ferner Folgendes umfasst:
Erhalten von Abrechnungsinformationen unter Verwendung der Abrechnungsidentifikationsinformationen durch Durchführen einer Abrechnung durch jede Weiterleitungsvorrichtung während des Löschens der Abrechnungssitzung.

14. Sitzungsverwaltungsfunktionsvorrichtung, die einen Speicher und einen Prozessor umfasst, wobei im Speicher ein Abrechnungscomputerprogramm für ein mobiles Kommunikationssystem gespeichert ist und der Prozessor das Programm ausführt, um die Schritte des Verfahrens nach einem der Ansprüche 1 bis 13 zu implementieren.

15. Computerlesbares Speichermedium, auf dem ein Computerprogramm gespeichert ist, wobei, wenn das Computerprogramm von einem Prozessor ausgeführt wird, die Schritte des Verfahrens nach einem der Ansprüche 1 bis 13 implementiert werden.

## Revendications

1. Procédé de facturation d'un dispositif de fonction de gestion de session, SMF, pour un système de communication mobile, comprenant :
l'envoi (S101) d'informations de paramètre de facturation correspondant à chaque dispositif d'acheminement à un système de facturation en ligne respectivement pendant une session de facturation, de sorte que le système de facturation en ligne renvoie un ensemble de stratégies de facturation pour chaque dispositif d'acheminement respectivement ; et
l'envoi (S102) de chaque stratégie de facturation renvoyée à un dispositif d'acheminement correspondant de sorte que chaque dispositif d'acheminement facture à un utilisateur un volume de données selon la stratégie de facturation correspondante ;
dans lequel le dispositif d'acheminement est un dispositif de fonction de plan d'utilisateur, UPF.

2. Procédé selon la revendication 1, dans lequel chaque dispositif d'acheminement est configuré pour réaliser une session de données avec l'utilisateur pour acheminer un flux de données de l'utilisateur ; chaque dispositif d'acheminement comprend un premier dispositif d'acheminement et un deuxième dispositif d'acheminement ; et les informations de paramètre de facturation comprennent des informations d'identification de facturation et des informations de notation de service.

3. Procédé selon la revendication 2, dans lequel l'envoi des informations de paramètre de facturation correspondant à chaque dispositif d'acheminement au système de facturation en ligne respectivement pendant la session de facturation, de sorte que le système de facturation en ligne renvoie un ensemble de stratégies de facturation pour chaque dispositif d'acheminement respectivement, comprend :
la génération des informations d'identification de facturation pour la session de données avec le premier dispositif d'acheminement, et l'envoi des informations d'identification de facturation et des informations de notation de service qui correspondent au premier dispositif d'acheminement au système de facturation en ligne, de sorte que le système de facturation en ligne renvoie un ensemble de stratégies de facturation pour le premier dispositif d'acheminement et crée la session de facturation ; et
l'envoi des informations d'identification de facturation et des informations de notation de service qui correspondent au deuxième dispositif d'acheminement au système de facturation en ligne pendant la session de facturation, de sorte que le système de facturation en ligne renvoie un ensemble de stratégies de facturation pour le deuxième dispositif d'acheminement.

4. Procédé selon la revendication 3, dans lequel le flux de données de l'utilisateur comprend un flux local et un flux non local ; et
avant d'envoyer les informations d'identification de facturation et les informations de notation de service qui correspondent au deuxième dispositif d'acheminement au système de facturation en ligne pendant la session de facturation, le procédé comprend :
la création d'un appel de données entre l'utilisateur et le deuxième dispositif d'acheminement, et l'acheminement du flux local via le deuxième dispositif d'acheminement en utilisant une technologie de déchargement.

5. Procédé selon la revendication 4, dans lequel la création de l'appel de données entre l'utilisateur et le deuxième dispositif d'acheminement, et l'acheminement du flux local via le deuxième dispositif d'acheminement en utilisant une technologie de déchargement comprennent :
la création de l'appel de données entre l'utilisateur et le deuxième dispositif d'acheminement ;
la création d'un classificateur de service de liaison montante ; et
l'acheminement du flux local via le deuxième dispositif d'acheminement en utilisant le classificateur de service de liaison montante.

6. Procédé selon la revendication 4, dans lequel l'envoi des informations d'identification de facturation et des informations de notation de service qui correspondent au deuxième dispositif d'acheminement au système de facturation en ligne pendant la session de facturation comprend :
l'envoi d'une demande de mise à jour de contrôle de crédit au système de facturation en ligne pendant la session de facturation, la demande de mise à jour de contrôle de crédit portant les informations d'identification de facturation et les informations de notation de service qui correspondent au deuxième dispositif d'acheminement.

7. Procédé selon la revendication 6, dans lequel la demande de mise à jour de contrôle de crédit porte en outre une indication de trafic de déchargement local.

8. Procédé selon la revendication 7, dans lequel l'indication de trafic de déchargement local est ajoutée à un champ d'extension prédéfini dans un paramètre de contrôle de crédit multiservice, MSCC, de la demande de mise à jour de contrôle de crédit, de sorte que la demande de mise à jour de contrôle de crédit porte en outre l'indication de trafic de déchargement local.

9. Procédé selon la revendication 3, dans lequel, avant d'envoyer les informations d'identification de facturation et les informations de notation de service qui correspondent au deuxième dispositif d'acheminement au système de facturation en ligne pendant la session de facturation, le procédé comprend en outre :
la commutation du flux de données de l'utilisateur du premier dispositif d'acheminement au deuxième dispositif d'acheminement dans un mode de continuité de session et de service.

10. Procédé selon la revendication 9, dans lequel la commutation du flux de données de l'utilisateur du premier dispositif d'acheminement au deuxième dispositif d'acheminement dans le mode de continuité de session et de service comprend :
la suppression d'un appel de données entre l'utilisateur et le premier dispositif d'acheminement ; et
la création d'un appel de données entre l'utilisateur et le deuxième dispositif d'acheminement dans le mode de continuité de session et de service.

11. Procédé selon la revendication 10, dans lequel la création de l'appel de données entre l'utilisateur et le deuxième dispositif d'acheminement dans le mode de continuité de session et de service comprend :
l'association de l'appel de données entre l'utilisateur et le deuxième dispositif d'acheminement à la session de facturation.

12. Procédé selon l'une quelconque des revendications 3 à 11, dans lequel les informations d'identification de facturation comprennent un identifiant de session et un identifiant de facturation ; les informations de notation de service comprennent un identifiant de service et un groupe de notation ; et
la génération des informations d'identification de facturation pour la session de données avec le premier dispositif d'acheminement, et l'envoi des informations d'identification de facturation et des informations de notation de service qui correspondent au premier dispositif d'acheminement au système de facturation en ligne comprennent :
la génération de l'identifiant de session et de l'identifiant de facturation selon une demande de création de session de facturation de l'utilisateur ;
la création de la session de données avec le premier dispositif d'acheminement ; et
l'envoi d'une demande de contrôle de crédit initial au système de facturation en ligne, la demande de contrôle de crédit initial portant l'identifiant de session, l'identifiant de facturation et l'identifiant de service et le groupe de notation qui correspondent au premier dispositif d'acheminement.

13. Procédé selon l'une quelconque des revendications 2 à 12, comprenant en outre :
l'obtention, en utilisant les informations d'identification de facturation, d'informations de facturation obtenues par chaque dispositif d'acheminement réalisant la facturation, pendant la suppression de la session de facturation.

14. Dispositif à fonction de gestion de session, comprenant une mémoire et un processeur, dans lequel la mémoire stocke un programme informatique de facturation pour un système de communication mobile, et le processeur exécute le programme pour mettre en œuvre les étapes du procédé selon l'une quelconque des revendications 1 à 13.

15. Support de stockage lisible par ordinateur stockant un programme informatique, dans lequel lorsque le programme informatique est exécuté par un processeur, les étapes du procédé selon l'une quelconque des revendications 1 à 13 sont mises en œuvre.
